# EUROPÄISCHE PATENTSCHRIFT

(11) **EP 1 305 179 B1**
(45) Veröffentlichungstag und Bekanntmachung des Hinweises auf die Patenterteilung: **28.09.2005**
(21) Anmeldenummer: 01957918.4
(22) Anmeldetag: 05.07.2001
(51) Int. Cl.: B60J 5/04

(54) **VERFAHREN ZUR HERSTELLUNG EINER TÜR EINES KRAFTFAHRZEUGES UND NACH DIESEM VERFAHREN HERGESTELLTE RAHMENLOSE TÜR**
METHOD FOR PRODUCTION OF A VEHICLE DOOR AND A FRAMELESS DOOR MADE BY SAID METHOD
PROCEDE DE FABRICATION D'UNE PORTE DE VEHICULE ET PORTE SANS CADRE FABRIQUEE AU MOYEN DE CE PROCEDE

(30) Priorität: 28.07.2000 DE 10037303
(43) Veröffentlichungstag der Anmeldung: 02.05.2003
(73) Patentinhaber: Nothelfer GmbH, 88212 Ravensburg (DE)
(72) Erfinder: ZIMMER, Erich, 66687 Wadern (DE)
(74) Vertreter: Dahlkamp, Heinrich-Leo
(86) Internationale Anmeldenummer: PCT/EP2001/007702
(87) Internationale Veröffentlichungsnummer: WO 2002/009963

(56) Entgegenhaltungen:
- EP-A- 0 776 778
- DE-A- 3 501 239
- DE-A- 19 538 595
- FR-A- 2 786 440

## Beschreibung

Die Erfindung bezieht sich auf ein Verfahren zur Herstellung einer Tür für ein Kraftfahrzeug gemäß Oberbegriff des Anspruches 1 und auf eine rahmenlose Tür für ein Kraftfahrzeug gemäß Oberbegriff des Anspruches 12.

In der DE 195 38 595 A1 ist eine derartige Kraftfahrzeugtür beschrieben, wobei die Tür aus einem Außenblech und einem Innenblech besteht, deren Ränder jeweils umgebogen und auf einer bestimmten Breite zur Anlage gebracht sind. In den Spalt zwischen den beiden Randstreifen wird zur Herstellung einer Schweißnaht ein Laserstrahl gerichtet. Das Umbiegen der Ränder beider Bleche ist aber relativ aufwendig. Die beiden Ränder müssen normalerweise für das Laserschweißen mit einer zusätzlichen Klemmvorrichtung zusammengehalten werden.

Im Hinblick auf eine Gewichtsreduzierung gehört es zum Stand der Technik, Türen für Kraftfahrzeuge aus Leichtbauwerkstoffen, insbesondere Aluminium herzustellen (vgl. EP-A 0 776 778 und FR-A 2 786 440). Bekannt ist es auch, die Innen- und Außenteile durch eine hochfeste Verbindung, insbesondere Laserschweißen, zusammenzufügen. Das Laserschweißen erfordert aber eine hohe Maßgenauigkeit der zu verbindenden Außen- und Innenteile.

Aus der DE 35 01 239 A1 ist eine Tür für ein Kraftfahrzeug bekannt, wobei ein einstückiges Türaußenelement aus Aluminium besteht, das innenseitig mit Hilfe von vorzugsweise ebenfalls aus Aluminium bestehenden Hohlträgern verstärkt ist. Außenteil und Hohlträger sind dabei über Verbindungselemente lösbar mit dem eigentlichen Türinnenblech verbunden.

Bekannt ist es weiterhin, Innenteile einer Tür mit einem Außenblech durch Bördeln zu verbinden. Hierbei ist ebenfalls eine hohe Maßhaltigkeit der zu verbindenden Teile erforderlich und es müssen unter Umständen zusätzliche Maßnahmen zur Herstellung einer dauerhaften Verbindung durchgeführt werden.

Der Erfindung liegt die Aufgabe zugrunde, ein Verfahren zur Herstellung einer möglichst leichten Tür mit einer hochfesten Fügeverbindung zwischen Innenteil und Außenblech vorzuschlagen, wobei die Fertigungstechnik kostengünstiger, flexibler und einfacher gestaltet werden kann.

Die Lösung dieser Aufgabe ist im Patentanspruch 1 angegeben. Die Unteransprüche 2 bis 11 enthalten sinnvolle ergänzende Maßnahmen. Im Patentanspruch 12 ist eine vorzugsweise nach dem erfindungsgemäßen Verfahren hergestellte rahmenlose Tür angegeben, die die erfindungsgemäße Aufgabe erfüllt.

Das erfindungsgemäße Verfahren sieht vor, dass ein ganz oder teilweise aus Aluminiumguss bestehendes, vorzugsweise als einteiliges Aluminiumdruckgussteil ausgebildetes Türinnenteil mit einem Türaußenblech aus Aluminium durch Laserschweißen verbunden wird. Auf ein Bördeln der Fügeverbindung wird hierbei verzichtet. Der Rand des Außenbleches wird lediglich zum Türinnenteil hin, vorzugsweise um max. 90°, abgekantet und an dem äußeren zuvor vorzugsweise spanend bearbeiteten Rand des Türinnenteils zur Anlage gebracht. Durch die Verwendung eines insbesondere einteiligen Türinnenteiles aus Aluminiumdruckguss wird die Anzahl der Einzelteile einer Tür reduziert und insbesondere die Fügetechnik vereinfacht. Der Aluminiumdruckguss erlaubt die Herstellung von komplexen Formen für das Türinnenteil, die z.B. durch eine Blechumformung nicht möglich ist, da Aluminium sich wegen der relativ geringen Dehnfähigkeit nur begrenzt umformen lässt. Von Bedeutung ist auch, dass ein bei dem Bördeln üblicherweise erforderliches Verkleben der Verbindung bei dem erfindungsgemäßen Verfahren nicht erforderlich ist. Damit entfallen die für das Kleben erforderlichen Applikationen und die Nachbehandlung durch Erwärmung. Durch das erfindungsgemäße Laserschweißen werden die Teile ohne Krafteinwirkung gefügt und es wird eine Formveränderung des Türaußenbleches - wie z.B. bei der kraftschlüssigen Verbindung durch Bördeln möglich - verhindert.

Die Verwendung des einteiligen Türinnenteiles aus Aluminiumdruckguss erspart auch zusätzliche Fügetechniken für eventuelle Verstärkungen, da durch eine entsprechende Gussrippenstruktur ohne weiteres zusätzliche Versteifungen des Bauteiles erreicht werden können. Dadurch kann gezielt die Crash-Steifigkeit der rahmenlosen Tür verbessert werden.

Die Erfindung wird anhand der beigefügten Figuren 1 bis 4 beispielsweise näher erläutert. Es zeigen
- Fig. 1: eine Gesamtdarstellung einer Vordertür an einem Kraftfahrzeug
- Fig. 2: in einem waagerechten Schnitt nach der Linie II-II von Fig. 1 den Ausschnitt der erfindungsgemäßen Verbindung zwischen Türinnenteil 1 und Türaußenblech 2 im Bereich des Seitenteiles 3 des Fahrzeuges.
- Fig. 3: in einem waagerechten Schnitt nach der Linie III-III von Fig. 1 die erfindungsgemäße Verbindung von Türinnenteil 1 und Türaußenblech 2 im Bereich der Befestigung der Tür mittels Scharnier 9 an einem Holm 8 und
- Fig. 4: in vergrößerter Darstellung zu Figuren 2 und 3 die Verbindungsstelle zwischen Türinnenteil 1 und Türaußenblech 2.

Das den Erfordernissen entsprechend profilierte Türinnenteil 1 besitzt an seinem äußeren Rand 11 jeweils eine Abstimmfläche 12, die entsprechend den Erfordernissen für das spätere Laserschweißen spanend bearbeitet werden kann. An diese Abstimmfläche 12 wird für das Laserschweißen der nach innen abgekantete Rand 13 des Türaußenbleches 2 zur Anlage gebracht. Durch einen in den Spalt zwischen den Anlageflächen gerichteten Laserstrahl wird dann eine als Kehlnaht ausgebildete Laserschweißnaht 7 erzeugt. Wie insbesondere aus Fig. 4 ersichtlich ist, ist die Breite A der Anlage des Randes 13 an der Abstimmfläche 12 etwa halb so groß wie die Gesamtbreite B der Abstimmfläche 12 des Innenteiles 1. Hierdurch ist auch bei Toleranzunterschieden immer eine Mindestanlage gewährleistet. Der Spalt 15 zwischen dem Rand 13 des Außenbleches 2 und dem Rand 11 des Türinnenteiles 1 erlaubt dabei eine den Erfordernissen entsprechende Einstellung.

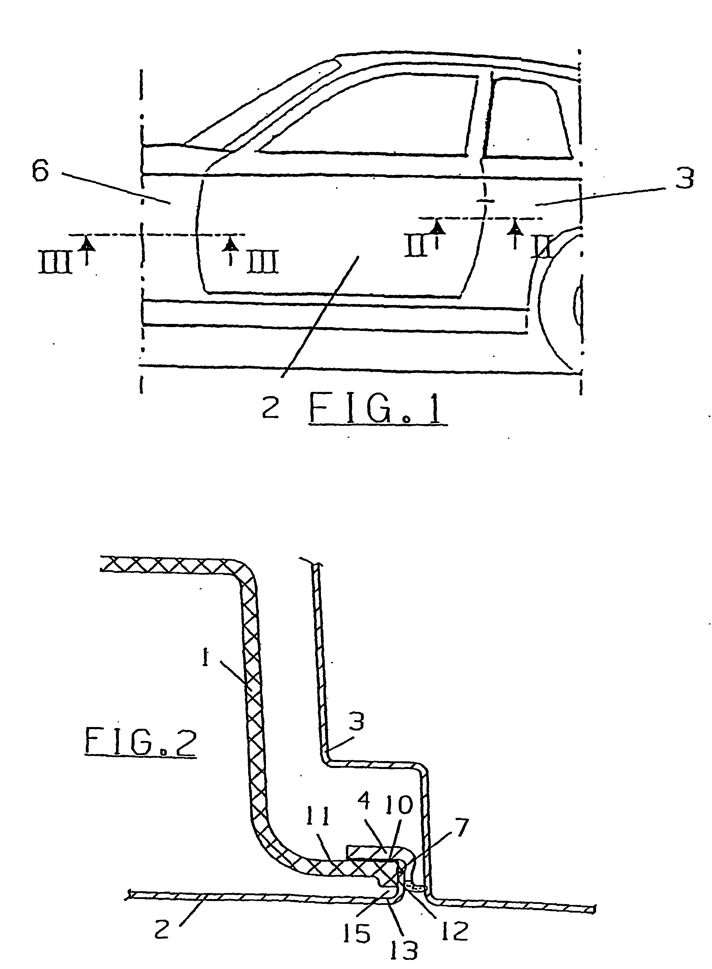

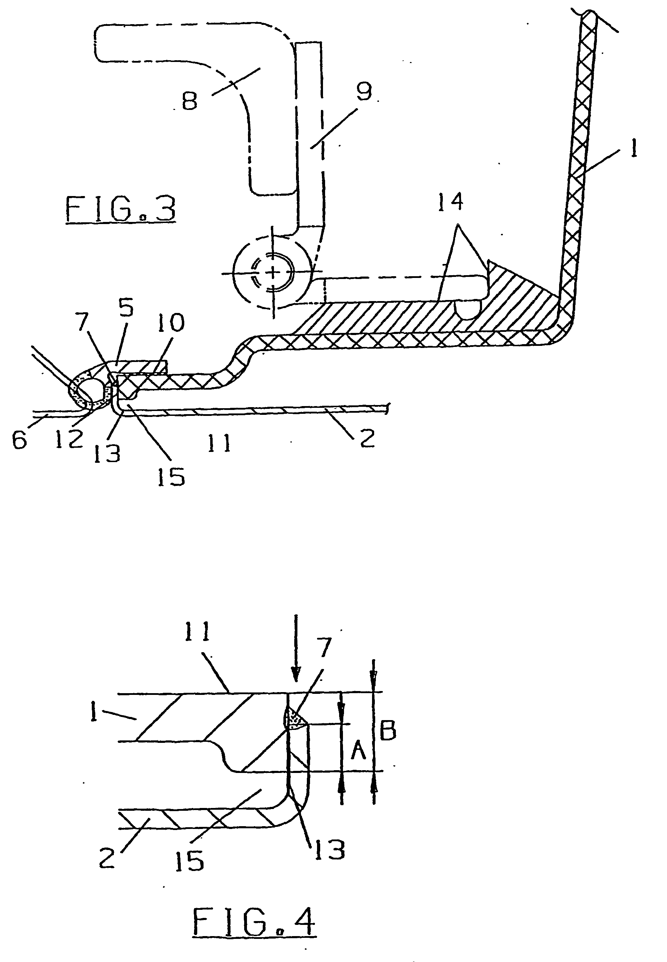

In den Figuren 2 und 3 sind zusätzlich an sich bekannte Fugendichtungen 4 und 5 dargestellt, die einerseits an der Innenseite des äußeren Randes 11 des Türinnenteiles 1 durch einen üblichen Kleber 10 befestigt sind und andererseits entweder an dem Seitenteil 3 oder dem vorderen Kotflügel 6 zur Anlage kommen.

Für eine Befestigung der Tür an dem Scharnier 9 besitzt das Türinnenteil 1 vorzugsweise spanend bearbeitete Abstimmflächen 14, um Sie ebenfalls durch Laserschweißen mit dem einen Schenkel des Scharnieres 9 zu verbinden.

## Patentansprüche

1. Verfahren zur Herstellung einer Tür für ein Kraftfahrzeug bestehend aus mindestens einem Türinnenteil (1) und mindestens einem Türaußenblech (2), die getrennt voneinander hergestellt und anschließend zu einer Einheit zusammengefügt werden, wobei
a) der Rand (13) des Türaußenbleches (2) zum Türinnenteil (1) abgekantet wird,
b) der abgekantete Rand (13) des Türaußenbleches (2) an einer Abstimmfläche (12) des äußeren Randes (11) des Türinnenteiles (1) zur Anlage gebracht wird und
c) Türinnenteil (1) und Türaußenblech (2) durch einen in den Spalt zwischen der Abstimmfläche (12) und dem Rand (13) gerichteten Laserstrahl mit Hilfe einer Laserschweißnaht (7) miteinander verbunden werden, **dadurch gekennzeichnet, dass**
d) das Türinnenteil (1) ganz oder teilweise aus Aluminiumguss besteht,
e) das Türaußenblech (2) aus Aluminium besteht und
f) die Abstimmflächen (12) des Türinnenteiles (1) als Voraussetzung zum Laserschweißen und zum Herstellen der erforderlichen Spaltmaße Zerspanend bearbeitet werden.

2. Verfahren nach Anspruch 1, **dadurch gekennzeichnet, dass** das Türinnenteil (1) als einteiliges oder mehrteiliges Aluminiumgussteil ausgebildet ist.

3. Verfahren nach Anspruch 1 oder 2, **dadurch gekennzeichnet, dass** das Türinnenteil (1) als Aluminiumdruckgussteil hergestellt ist.

4. Verfahren nach Anspruch 1, 2 oder 3, **dadurch gekennzeichnet, dass** das Türinnenteil (1) aus einer schweißbaren Aluminium-Legierung mit hoher Dehnfähigkeit besteht.

5. Verfahren nach einem der vorhergehenden Ansprüche, **dadurch gekennzeichnet, dass** das Türinnenteil (1) die Legierung AlMg 5 Si 1,2 Mn enthält.

6. Verfahren nach Anspruch 1, **dadurch gekennzeichnet, dass** das Türaußenblech (2) die Legierung AlMg 0,4 Si 1,2 (Alu 6016) enthält.

7. Verfahren nach Anspruch 1, **dadurch gekennzeichnet, dass** die Abstimmflächen (12) des Türinnenteiles (1) als Voraussetzung zum Laserschweißen und zum Herstellen der erforderlichen Spaltmaße zerspanend bearbeitet werden.

8. Verfahren nach Anspruch 1, **dadurch gekennzeichnet, dass** die Abstimmflächen (14) des Türinnenteiles (1) für die Scharnierauflage, als Voraussetzung zum Fügen mittels Laserschweißen, zerspanend bearbeitet werden.

9. Verfahren nach Anspruch 1, **dadurch gekennzeichnet, dass** die Breite A der Auflagefläche des Randes (13) des Türaußenbleches (2) etwa der Hälfte der Breite B der Abstimmfläche (12) des Türinnenteiles (1) beträgt.

10. Verfahren nach Anspruch 1, **dadurch gekennzeichnet, dass** der Rand (13) des Türaußenbleches (2) vor dem Laserschweißen um höchstens 90° abgekantet wird.

11. Verfahren nach Anspruch 1, **dadurch gekennzeichnet, dass** die Laserschweißnaht (7) durch ein an der Innenseite des Türinnenteiles (1) aufgeklebte profilierte Fugendichtung (4, 5) abgedeckt wird.

12. Rahmenlose Tür für ein Kraftfahrzeug, vorzugsweise hergestellt nach einem Verfahren gemäß einem der vorhergehenden Ansprüche, bestehend aus einem ganz oder teilweise aus Aluminiumguss, vorzugsweise einteiligen oder mehrteiligen Türinnenteil (1) aus Aluminiumdruckguss mit einem äußeren Rand (11) und spanend bearbeiteten Abstimmflächen (12), mit denen ein zum Türinnenteil (1) abgekanteter Rand (13) eines Türaußenbleches (2) aus Aluminium durch Laserschweißen mit Hilfe eines in den Spalt zwischen den Rändern (11, 13) gerichteten Laserstrahl verbunden ist.

## Claims

1. Method for production of a door for a motor vehicle, comprising at least one said door inner piece (1) and at least one said door outer sheet (2), which are produced separately from each other and are then joined to form a single unit, whereby
a) the said edge (13) of the said door outer sheet (2) is folded towards the said door inner piece (1),
b) the said folded edge (13) of the said door outer sheet (2) is brought into contact with a said mating surface (12) of the said outer edge (11) of the said door inner piece (1), and
c) the said door inner piece (1) and the said door outer sheet (2) are connected to each other by a said laser-welded seam (7) produced by means of a laser beam directed in the gap between the said mating surface (12) and the said edge (13), **characterized in that**
d) the said door inner piece (1) is entirely or partially made of cast aluminum,
e) the said door outer sheet (2) is made of aluminum,
f) the said mating surfaces (12) of the said inner piece (1) are machined in metal-cutting technique as a prerequisite to laser welding and to establishing the required gap sizes.

2. Method in accordance with claim 1, **characterized in that** the said door inner piece (1) is designed as a single-piece or multiple-piece cast aluminum piece.

3. Method in accordance with claim 1 or 2, **characterized in that** the said door inner piece (1) is produced as a diecast aluminum piece.

4. Method in accordance with claim 1,2 or 3, **characterized in that** the said door inner piece (1) is made of a weldable aluminum alloy with high ductility.

5. Method in accordance with one of the above claims, **characterized in that** the said door inner piece (1) contains the alloy AlMg 5 Si 1.2 Mn.

6. Method in accordance with claim 1, **characterized in that** the said door outer sheet (2) contains the alloy AlMg 0.4 Si 1.2 (Alu 6016).

7. Method in accordance with claim 1, **characterized in that** the said mating surfaces (12) of the said door inner piece (1) are machined in metal-cutting technique as a prerequisite for the laser welding and for producing the necessary gap.

8. Method in accordance with claim 1, **characterized in that** the said mating surfaces (14) of the said door inner piece (1) are machined in metal-cutting technique for the hinge contact, as a prerequisite for joining by means of laser welding.

9. Method in accordance with claim 1, **characterized in that** the said width A of the contact surface of the said edge (13) of the said door outer sheet (2) is approx. half the said width B of the said mating surface (12) of the said door inner piece (1).

10. Method in accordance with claim 1, **characterized in that** the said edge (13) of the said door outer sheet (2) is folded by at most 90° before the laser welding,

11. Method in accordance with claim 1, **characterized in that** the said laser-welded seam (7) is covered by a said profiled joint sealing (4, 5) glued by adhesive on the inside of the said door inner piece (1).

12. Frameless door for a motor vehicle, which is preferably produced according to a method in accordance with one of the above claims, comprising a preferably single-piece or multiple-piece door inner piece (1) made entirely or partially of cast aluminum, preferably of diecast aluminum, with a said outer edge (11) and said mating surfaces (12) machined in metal-cutting technique, with which a said edge (13) of a said door outer sheet (2) made of aluminum, which edge is folded towards the said door inner piece (1), is joined by laser welding by means of a laser beam directed in the gap between the said edges (11,13).

## Revendications

1. Procédé de fabrication d'une porte de véhicule constituée d'au moins une pièce intérieure de porte (1) et d'au moins une tôle extérieure de porte (2) qui sont fabriquées séparément l'une de l'autre et assemblées ensuite pour former une unité,
a) le bord (13) de la tôle extérieure de porte (2) étant replié vers la pièce intérieure de porte,
b) le bord replié (13) de la tôle extérieure de porte (2) prenant appui contre une surface d'accord (12) du bord extérieur (11) de la pièce intérieure de porte (1) et
c) la pièce intérieure de porte (1) et la tôle extérieure de porte (2) étant assemblées l'une à l'autre par un rayon laser dirigé dans la fente entre la surface d'accord (12) et le bord (13) à l'aide d'une soudure au laser (7),
**caractérisé en ce que**
d) la pièce intérieure de porte (1) est entièrement ou partiellement en fonte d'aluminium,
e) la tôle extérieure de porte (2) est en aluminium et
f) les surfaces d'accord (12) de la pièce intérieure de porte (1) sont usinées par enlèvement de copeaux, ceci en tant que condition pour le soudage au laser et la réalisation des dimensions de fente nécessaire.

2. Procédé selon la revendication 1, **caractérisé en ce que** la pièce intérieure de porte (1) se présente sous forme de pièce en fonte d'aluminium en une seule pièce ou en plusieurs pièces.

3. Procédé selon la revendication 1 ou 2, **caractérisé en ce que** la pièce intérieure de porte (1) est fabriquée comme pièce en aluminium coulé sous pression.

4. Procédé selon la revendication 1, 2 ou 3, **caractérisé en ce que** la pièce intérieure de porte (1) est constitué d'un alliage d'aluminium soudable possédant une capacité d'extension élevée.

5. Procédé selon une des revendications précédentes, **caractérisé en ce que** la pièce intérieure de porte (1) contient l'alliage AlMg 5 Si 1,2 Mn.

6. Procédé selon la revendication 1, **caractérisé en ce que** la tôle extérieure de porte (2) contient l'alliage AlMg 0,4 Si 1,2 (alu 6016).

7. Procédé selon la revendication 1, **caractérisé en ce que** les surfaces d'accord (12) de la pièce intérieure de porte (1) sont usinées par enlèvement de copeaux, ceci en tant que condition pour le soudage au laser et la réalisation des dimensions de fente nécessaire.

8. Procédé selon la revendication 1, **caractérisé en ce que** les surfaces d'accord (14) de la pièce intérieure de porte (1) pour le support de charnière sont usinées par enlèvement de copeaux, ceci en tant que condition pour l'assemblage par soudage au laser.

9. Procédé selon la revendication 1, **caractérisé en ce que** la largeur A de la surface d'appui du bord (13) de la tôle extérieure de porte (2) correspond approximativement à la largeur B de la surface d'accord (12) de la pièce intérieure de porte (1).

10. Procédé selon la revendication 1, **caractérisé en ce que** le bord (13) de la tôle extérieure de porte (2) est replié de 90° au plus avant le soudage au laser.

11. Procédé selon la revendication 1, **caractérisé en ce que** la soudure au laser (7) est recouverte par un joint profilé (4, 5) collé sur la face intérieure de la pièce intérieure de porte (1).

12. Porte sans cadre de véhicule, fabriquée de préférence selon un procédé conformément à une des revendications précédentes, constituée d'une pièce intérieure de porte (1) entièrement ou partiellement en fonte d'aluminium, de préférence en une pièce ou en plusieurs pièces, en aluminium coulé sous pression, avec un bord extérieur (11) et des surfaces d'accord (12) usinées par enlèvement de copeaux, auxquelles un bord (13) d'une tôle extérieure de porte (2) en aluminium, replié vers la pièce intérieure de porte (1) est assemblé par soudage au laser au moyen d'un rayon laser dirigé dans la fente formée entre les bords (11, 13).
